# FASCICULE DE BREVET EUROPEEN

(11) **EP 3 027 883 B1**
(45) Date de publication et mention de la délivrance du brevet: **06.09.2017**
(21) Numéro de dépôt: 14737263.5
(22) Date de dépôt: 10.07.2014
(51) Int. Cl.: F02M 59/36, F16K 27/02

(54) **AGENCEMENT CLIPSÉ D'UNE VANNE SUR UNE POMPE**
ANORDNUNG MIT EINEM AN EINE PUMPE GEKLEMMTEN VENTIL
ARRANGEMENT OF A VALVE CLIPPED TO A PUMP

(30) Priorité: 31.07.2013 FR 1357558
(43) Date de publication de la demande: 08.06.2016
(73) Titulaire: Delphi International Operations Luxembourg S.à r.l., 4940 Bascharage (LU)
(72) Inventeur: DUPONT, Richard, F-37100 Tours (FR); ROUET, Jean-Luc, F-41120 Chitenay (FR)
(74) Mandataire: Delphi France SAS
(86) Numéro de dépôt international: PCT/EP2014/064828
(87) Numéro de publication internationale: WO 2015/014588

(56) Documents cités:
- EP-A1- 1 331 425
- EP-A1- 2 538 067
- DE-A1- 10 108 201
- DE-A1-102007 053 800
- US-A1- 2004 237 939
- US-A1- 2006 137 659
- US-A1- 2009 301 442

## Description

### DOMAINE TECHNIQUE

La présente invention est relative à l'agencement clipsé d'une vanne sur un corps de pompe ou en bout d'une rampe commune alimentant des injecteurs.

### ARRIERE-PLAN TECHNOLOGIQUE DE L'INVENTION

L'agencement et la fixation d'une vanne sur un corps de pompe haute pression se fait généralement au moyen de vis. La vanne est d'abord centrée sur le corps en ajustant une surface cylindrique femelle de la vanne sur une surface cylindrique mâle du corps de pompe puis en la fixant l'ensemble au moyen de vis. Par ailleurs l'agencement d'une vanne haute pression an bout de la rampe commune d'un système d'injection comprend également un moyen de centrage puis une fixation. Dans ce cas le corps de vanne peut être fileté de sorte à être directement vissé en bout de la rampe, elle-même filetée.

Quel que soit le type de vanne et le dispositif sur lequel elle est placée, l'agencement requiert des moyens de fixations, des usinages spécifiques et du temps d'assemblage. US2009/301442, EP2538067 et DE10108201 divulguent un agencement d'une vanne sur un dispositif, le boîtier de la vanne étant clipsé sur le corps du dispositif.

### RESUME DE L'INVENTION

La présente invention vise à résoudre ces problèmes en proposant un agencement d'une vanne sur un dispositif, le boitier de la vanne étant clipsé sur le corps du dispositif.

Plus particulièrement, le boitier et le corps intègrent des moyens dont l'un au moins est élastique, lesdits moyens s'agençant de manière complémentaire dans un engagement linéaire selon un axe principal. L'engagement est de type mâle-femelle et se fait en force. Au cours de l'engagement le moyen élastique se déforme.

L'un des moyens comprend une gorge et l'autre moyen comprend une protubérance agencée de sorte à s'engager dans la gorge au terme de l'engagement en force de sorte que le boitier de vanne soit clipsé sur le corps du dispositif.

Le boitier et le corps sont pourvus de faces radiales, s'agençant en appui l'une contre l'autre lorsque la protubérance s'engage dans la gorge de sorte que le boitier est clipsé sur le corps et est axialement positionnée relativement au corps.

Lors de l'engagement de la protubérance dans la gorge le moyen élastique revient vers sa forme au repos en conservant une déformation élastique résiduelle de sorte que le boitier est clipsé, axialement A positionné et radialement maintenu relativement au corps.

La gorge et la protubérance sont pourvues de faces complémentaires maintenues l'une contre l'autre par la déformation élastique résiduelle. Ceci génère une force axiale sollicitant le boitier en appui contre le corps de sorte que la vanne est clipsé, axialement et radialement maintenue relativement au dispositif.

Les moyens complémentaires comprennent deux parties cylindriques, tubulaires dont l'une au moins est crénelée de sorte que les merlons soient élastiquement déformables.

La protubérance est un bourrelet annulaire intégré à la face interne de la partie tubulaire femelle et dans lequel, la gorge est une gorge annulaire intégrée à la face externe de la partie tubulaire mâle.

Les faces complémentaires de la gorge et du bourrelet sont des faces coniques dont les sommets sont sur l'axe principal et sont dirigés vers l'intérieur du corps.

Par ailleurs, une fois assemblés, la vanne et le dispositif peuvent être séparés de manière non destructive. La partie élastique se déforme comme précédemment.

Plus particulièrement, le corps est celui d'une pompe haute pression de carburant et la vanne, agencée par clipsage sur le corps de pompe, contrôle l'entrée du carburant dans la pompe.

L'invention est également relative à une vanne apte à être agencée dans un agencement réalisé selon les paragraphes précédents.

### BREVE DESCRIPTION DES DESSINS

D'autres caractéristiques, buts et avantages de l'invention apparaîtront à la lecture de la description détaillée qui suit, et en regard des dessins annexés, donnés à titre d'exemple non limitatif et sur lesquels:
- la figure 1 est une coupe axiale d'un boitier de vanne agencé sur une pompe autre pression.
- la figure 2 est un détail de la figure 1.
- la figure 3 est une coupe axiale d'une vanne agencée en bout de la rampe commune d'un système sur une pompe haute pression.
- la figure 4 est une vue extérieure du boitier de vanne de la figure 1.

### DESCRIPTION DES MODES DE REALISATION PREFERES

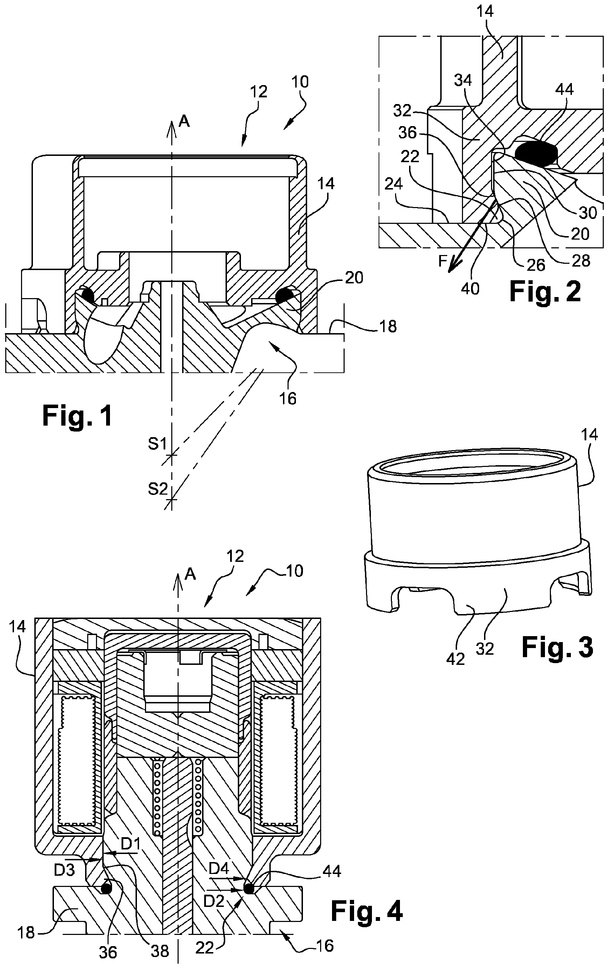

Un premier mode de réalisation non limitatif de l'agencement 10 selon l'invention est maintenant décrit en références aux figures 1, 2 et 3.

Une vanne 12, dont n'est représenté que le boitier 14 est agencé en tête d'une pompe haute pression 16.

Le corps 18 de la pompe 16 est pourvu d'un alésage débouchant s'étendant selon un axe principal A et entouré à son embouchure d'un bossage 20 cylindrique ayant un premier diamètre D1. Au pied du bossage 20 est réalisée une gorge 22 annulaire et, au pourtour du bossage 20, le corps 18 est pourvu d'une surface 24 discale radiale se raccordant au bossage 20 selon un congé 26 périphérique formant le fond de la gorge 22. Le fond de la gorge a un second diamètre D2. Le congé 26 se raccorde vers le haut, dans le sens conventionnel et non limitatif des figures, avec une surface conique 28 allant en s'évasant et dont le sommet SV est sur l'axe principal A à l'intérieur du corps 16 de pompe. La surface conique 28 rejoint en haut le premier diamètre D1 de la surface cylindrique 30 principale du bossage 20. Dans un mode de réalisation préféré l'angle au sommet du cône est compris entre 10° et 45°.

Le boitier 14 de la vanne 12 est pourvu d'un pied 32 périphérique globalement cylindrique qui dans l'agencement 10 est coaxial A avec le bossage 20. Le pied 32 a une surface intérieure 34 cylindrique ayant un troisième diamètre D3, à peine plus grand que le premier diamètre D1, et qui est terminée à son extrémité basse, selon le sens conventionnel non limitatif des figures, par un bourrelet 36 périphérique intérieur formant une protubérance radiale. Le bourrelet 36 se raccorde à la surface cylindrique 34 selon une courte surface conique 38, dont le sommet S2 est sur l'axe principal A voisin du sommet S1 de la surface conique du bossage 20, l'angle au sommet de la surface conique 38 étant légèrement inférieur à l'angle au sommet du cône de la gorge 22. La surface conique 38 du boitier 14 s'étend vers l'extrémité du pied 32 jusqu'à avoir un quatrième D4, légèrement plus grand que celui D2 du fond de la gorge 22, puis elle s'évase rapidement se raccordant vers le bas à une surface discale radiale 40.

Par ailleurs et plus particulièrement visible sur la figure 3, le pied 32 du boitier 14 est crénelé de sorte que les merlons 42 ainsi créés sont pourvus d'une légère élasticité radiale. Le bourrelet 36 périphérique n'est, quant à lui, que sur les merlons 42.

L'agencement 10 de la vanne 12 sur le corps de pompe 18 est maintenant décrit.

Avant que ne soit réalisé le montage, la vanne 12 et la pompe 18 sont alignées selon l'axe principal A et approchées de sorte que le bourrelet 36 soit en contact avec le sommet du bossage 20. En exerçant sur le boitier 14 de la vanne une force axiale dirigée vers la pompe les merlons 42 s'écartent légèrement de manière élastique de sorte que le bossage 20 entre dans le pied 32 de la vanne, le sommet du bourrelet 36, de diamètre D4, s'engageant autour de la surface cylindrique 30 et glissant jusqu'à ce que le bourrelet 36 s'agence dans la gorge 22. Les merlons 42 élastiquement déformés reprennent une forme proche de la forme de repos mais conservent une déformation élastique résiduelle. Les deux surfaces coniques 28, 38, sont alors pressées l'une contre l'autre par la déformation résiduelle ce qui engendre sur chaque merlon 42 une force F normale aux surfaces coniques 28, 38 en contact, la résultante de toutes les forces F étant selon l'axe principal A et dirigée vers la pompe 16. Le boitier 14 de la vanne, sur lequel s'applique cette force résultante axiale, se place alors en appui contre le corps de pompe, les deux surfaces discales 24, 40 étant en contact l'une contre l'autre.

L'étanchéité de l'agencement 10 est assuré par un joint torique 44 agencé entre le boitier 14 et le corps 18 de pompe, le joint 44 ayant été placé préalablement à l'engagement du pied 32 de vanne autour du bossage 20.

Il apparait alors que l'agencement 10 ainsi réalisé assure un positionnement de la vanne 12 relativement au corps 18 autant dans la direction de l'axe principal A, la vanne étant forcée en appui contre le corps de pompe, que dans la direction radiale, l'ajustement des diamètres interdisant ce type de déplacement.

La déformation résiduelle des merlons 42 assure la maintien en position mais les forces générées peuvent être vaincus et la vanne 12 peut être repositionnée angulairement en la tournant autour de l'axe principal A.

De même, la vanne 12 peut être retirée en exerçant sur le boitier 14 une force axiale dirigée « vers le haut » de sorte que les merlons 42 s'écartent à nouveau de manière élastique et glissent à nouveau le long du bossage 20.

De multiples alternatives peuvent être réalisées en suivant les enseignements précédemment décrits. Ainsi le bossage peut être crénelé de sorte que les merlons ainsi formés se déforment radialement vers l'axe principal. De plus l'engagement avec la vanne femelle et la pompe mâle peut être inversé, le pied de vanne entrant dans le corps, les merlons s'écartant qu'ils soient sur la vanne ou sur le bossage.

Un second mode de réalisation est maintenant brièvement décrit en référence à la figure 4. Il est relatif à une vanne 12 agencée en bout de la rampe commune 16 d'un système d'injection. Le principe est similaire à celui du premier morde de réalisation, le pied crénelé de la vanne étant pourvu d'un bourrelet qui se loge dans une rainure réalisée au pied d'une partie cylindrique s'étendant depuis la rampe commune. La différence majeure réside dans le positionnement du joint torique d'étanchéité qui dans ce cas est agencé en fond de gorge et sur lequel appui l'extrémité du bourrelet.

Tel que cela apparaît sur les figures, le boitier 14 renferme un actionneur électromagnétique comprenant une bobine fixe et un noyau axialement mobile coopérant avec une vanne. Dans ce contexte le boitier 14 de la vanne 12 est réalisé en acier magnétique et l'agencement clipsé décrit assure un excellent contact direct entre l'acier du boitier 14 et celui du corps de pompe ou celui de la rampe commune assurant une continuité magnétique favorable au fonctionnement de l'ensemble.

## Revendications

1. Agencement (10) d'une vanne (12) sur un dispositif (16), le boitier (14) de la vanne (12) étant clipsé sur le corps (18) du dispositif (16) et dans lequel,
le boitier (14) et le corps (18) intègrent des moyens (20-42) dont l'un au moins est élastique (42), lesdits moyens s'agençant de manière complémentaire dans un engagement linéaire selon un axe principal (A), l'engagement étant de type mâle-femelle et se faisant en force au cours duquel le moyen élastique (42) se déforme et dans lequel l'un des moyen (20) comprend une gorge (22) et l'autre moyen (32) comprend une protubérance (36) agencée de sorte à s'engager dans la gorge (22) au terme de l'engagement en force de sorte que le boitier (14) de vanne (12) est clipsé sur le corps (18) du dispositif (16) et dans lequel,
les moyens complémentaires (20-42) comprennent deux parties cylindriques (20, 32) tubulaires dont l'une au moins est crénelée de sorte que ses merlons (42) soient élastiquement déformables et dans lequel,
la protubérance est un bourrelet (36) annulaire intégré à la face interne (34) de la partie tubulaire femelle (32) et dans lequel, la gorge (22) est une gorge annulaire intégrée à la face externe (30) de la partie tubulaire mâle (20).

2. Agencement (10) selon la revendication 1 dans lequel le boitier (14) et le corps (18) sont pourvus de faces radiales (24, 40) s'agençant en appui l'une contre l'autre lorsque la protubérance (36) s'engage dans la gorge (22) de sorte que le boitier (14) est clipsé sur le corps (18) et est axialement (A) positionnée relativement au corps (18).

3. Agencement (10) selon la revendication 2 dans lequel, lors de l'engagement de la protubérance (36) dans la gorge (22) le moyen élastique (42) revient vers sa forme au repos en conservant une déformation élastique résiduelle de sorte que le boitier (14) est clipsé, axialement (A) positionné et radialement maintenu relativement au corps (18).

4. Agencement (10) selon la revendication 3 dans lequel la gorge (22) et la protubérance (36) sont pourvues de faces (28, 38) complémentaires maintenues l'une contre l'autre par la déformation élastique résiduelle et générant une force F axiale (A) sollicitant le boitier (14) en appui contre le corps (18) de sorte que la vanne (12) est clipsée, axialement et radialement maintenue relativement au dispositif (16).

5. Agencement (10) selon la revendication 1 prise en combinaison avec la revendication 6 dans lequel, les faces complémentaires (28, 38) de la gorge (22) et du bourrelet (36) sont des faces coniques dont les sommets (S1, S2) sont sur l'axe principal (A) et sont dirigés vers l'intérieur du corps (18).

6. Agencement (10) selon l'une quelconque des revendications précédentes dans lequel la vanne (12) et le dispositif (16) peuvent être séparés de manière non destructive.

7. Agencement (10) selon l'une quelconque des revendications précédentes dans lequel le corps (18) est celui d'une pompe (16) haute pression de carburant et dans lequel la vanne (12) contrôle l'entrée du carburant dans la pompe (16).

8. Vanne (12) apte à être agencée dans un agencement (10) réalisé selon l'une quelconque des revendications précédentes.

## Patentansprüche

1. Anordnung (10) eines Ventils (12) an einer Vorrichtung (16),
wobei das Gehäuse des Ventils (12) an den Körper (18) der Vorrichtung (16) aufgeclipst ist,
wobei das Gehäuse (14) und der Körper (18) Mittel (20- 42) umfassen, von denen zumindest eines elastisch (42) ist, wobei die Mittel sich in komplementärer Weise in linearem Eingriff entlang einer Hauptachse (A) zusammenfügen, wobei der Eingriff vom Typ Einsteck-Aufnahme ist und kraftschlüssig erfolgt, während dessen das elastische Mittel (42) sich verformt und wobei eines der Mittel (20) eine Nut (22) aufweist und das andere Mittel (32) einen Vorsprung (36) aufweist, der so angeordnet ist, dass er in die Nut (22) zwecks kraftschlüssigen Eingriffs eingreift, so dass das Gehäuse (14) des Ventils (12) an den Körper (18) der Vorrichtung (16) aufgeclipst wird, und wobei
die komplementären Mittel (20 - 42) zwei rohrförmige, zylindrische Teile (20, 32) aufweisen, von denen zumindest eines zinnenförmig ausgeführt ist, so dass seine Zinnen (42) elastisch verformbar sind, und wobei
der Vorsprung eine ringförmige Wulst (36) ist, die der Innenseite (34) des rohrförmigen Aufnahmeteils (32) integriert ist und wobei die Nut (22) eine ringförmige Nut ist, die der Außenseite (30) des rohrförmigen Einsteckteils (20) integriert ist.

2. Anordnung (10) nach Anspruch 1, wobei das Gehäuse (14) und der Körper (18) mit radialen Flächen (24, 40) versehen sind, die sich in Anlage aneinander zusammenfügen, wenn der Vorsprung (36) in die Nut (22) eingreift, so dass das Gehäuse (14) an den Körper (18) aufgeclipst wird und axial (A) relativ zum Körper (18) positioniert wird.

3. Anordnung (10) nach Anspruch 2, wobei bei dem Eingriff des Vorsprungs (36) in die Nut (22) das elastische Mittel (42) in seine Ruhestellungsform zurückkehrt und dabei eine elastische Restverformung beibehält, so dass das Gehäuse (14) axial (A) positioniert und relativ zum Körper (18) radial gehalten aufgeclipst wird.

4. Anordnung (10) nach Anspruch 3, wobei die Nut (22) und der Vorsprung (36) mit komplementären Flächen (28, 38) versehen sind, die durch elastische Restverformung aneinandergehalten werden und eine axiale (A) Kraft F erzeugen, mit welcher das Gehäuse (14) in Anlage an den Körper (18) beaufschlagt wird, so dass das Ventil (12) relativ zur Vorrichtung (16) axial und radial gehalten aufgeclipst wird.

5. Anordnung (10) nach Anspruch 1 in Kombination mit Anspruch 6, wobei die komplementären Flächen (28, 38) der Nut (22) und der Wulst (36) konische Flächen sind, deren Scheitel (S1, S2) auf der Hauptachse (A) liegen und nach innerhalb des Körpers (18) gerichtet sind.

6. Anordnung (10) nach einem der vorangehenden Ansprüche, wobei das Ventil (12) und die Vorrichtung (16) in nicht destruktiver Weise getrennt werden können.

7. Anordnung (10) nach einem der vorangehenden Ansprüche,
wobei der Körper (18) derjenige einer Kraftstoffhochdruckpumpe (16) ist und wobei das Ventil (12) den Einlass von Kraftstoff in die Pumpe (16) steuert.

8. Ventil (12), das dazu geeignet ist, in einer Anordnung (10) nach einem der vorangehenden Ansprüche angeordnet zu werden.

## Claims

1. Arrangement (10) of a valve (12) on a device (16), the casing (14) of the valve (12) being snap-fitted onto the body (18) of the device (16) and in which,
the casing (14) and the body (18) have, integrated therein, means (20-42) of which at least one is elastic (42), said means being arranged in a complementary manner in a linear engagement along a main axis (A), the engagement being of the male-female type and being a force fit, in the course of which the elastic means (42) deforms and in which one of the means (20) comprises a channel (22) and the other means (32) comprises a protuberance (36) arranged so as to engage in the channel (22) at the end of the force-fitting such that the casing (14) of the valve (12) is snap-fitted onto the body (18) of the device (16) and in which,
the complementary means (20-42) comprise two tubular cylindrical portions (20, 32) of which at least one is crenellated such that its merlons (42) are elastically deformable and in which,
the protuberance is an annular bead (36) integrated into the internal face (34) of the female tubular portion (32) and in which the channel (22) is an annular channel integrated into the external face (30) of the male tubular portion (20).

2. Arrangement (10) according to Claim 1, in which the casing (14) and the body (18) are provided with radial faces (24, 40) arranged pressing against one another when the protuberance (36) engages in the channel (22) such that the casing (14) is snap-fitted onto the body (18) and is axially (A) positioned relative to the body (18).

3. Arrangement (10) according to Claim 2, in which, when the protuberance (36) engages in the channel (22), the elastic means (42) returns to its rest shape, retaining a residual elastic deformation such that the casing (14) is snap-fitted, positioned axially (A) and held radially relative to the body (18).

4. Arrangement (10) according to Claim 3, in which the channel (22) and the protuberance (36) are provided with complementary faces (28, 38) held against one another by the residual elastic deformation and producing an axial (A) force F pressing the casing (14) against the body (18) such that the valve (12) is snap-fitted, axially and held radially relative to the device (16).

5. Arrangement (10) according to Claim 1, considered in combination with Claim 6, in which the complementary faces (28, 38) of the channel (22) and of the bead (36) are conical faces whose vertices (S1, S2) are on the main axis (A) and are oriented towards the interior of the body (18).

6. Arrangement (10) according to any one of the preceding claims, in which the valve (12) and the device (16) may be separated in a non-destructive manner.

7. Arrangement (10) according to any one of the preceding claims, in which the body (18) is that of a high-pressure fuel pump (16) and in which the valve (12) controls the ingress of fuel into the pump (16).

8. Valve (12) able to be arranged in an arrangement (10) created according to any one of the preceding claims.
